# EUROPEAN PATENT SPECIFICATION

(11) **EP 0 563 419 B1**
(45) Date of publication and mention of the grant of the patent: **24.04.1996**
(21) Application number: 92105528.1
(22) Date of filing: 31.03.1992
(51) Int. Cl.: A46D 3/08, B23Q 7/00

(54) **Method of producing brushes**
Bürstenherstellungsverfahren
Procédé pour la fabrication de brosses

(43) Date of publication of application: 06.10.1993
(73) Proprietor: G.B. BOUCHERIE, N.V., B-8870 Izegem (BE)
(72) Inventor: Boucherie, Leonel P., B-8870 Izegem (BE)
(74) Representative: Degwert, Hartmut, Dipl.-Phys.

(56) References cited:
- EP-A- 0 195 134
- DE-A- 2 659 458
- DE-A- 2 731 762
- GB-A- 1 498 457

## Description

The present invention relates to a method of producing brushes, in particular toothbrushes, wherein brush bodies having holes for receiving tufts of bristles are supplied to a filling station where each brush body is moved to expose each of its holes to a filling tool which implants a tuft of bristles into each of said holes, whereafter the brush bodies are transferred to a conveyor to be moved between a plurality of processing stations provided along the conveyor, a brush body supply station being provided along said conveyor upstream from said filling station and said processing stations, said brush bodies being transferred between said stations while being held on a carrier member, and each carrier member being releasably coupled to a drive in said filling station to move said carrier member in a manner to successively expose each hole of the brush body to said filling tool.

A machine for perfoming a method of this type is known from DE-OS-26 59 458. In this machine, each brush body is held on a clamp plate which in turn is mounted on a base plate. When the conveyor is indexed to expose a new brush body to the filling tool, all base/clamp plate units are moved simultaneously. Since high masses are involved, the indexing step is slow so that continous operation of the filling tool is not feasible. Therefore, the operation speed of the machine disclosed is limited.

In other conventional brush making machines the filling station is provided with a turret which has two pairs of opposed faces for clamping brush bodies thereon. A brush making machine of this type is disclosed in EP 0 021 464 A1. The turret is indexed in 90° steps to present each face carrying a new brush body to the filling tool. The filling tool has a reciprocating filling member for implanting tufts of bristles into the holes of the brush body. As the filling member performs reciprocating strokes along a fixed line the turret must move in mutually perpendicular directions to expose each hole of the brush body to the filling member. During the time a brush body is processed by the filling tool, a new brush body is supplied to the adjacent upstream face of the turret. During the same time, a transfer unit comprising grippers removes a filled brush body from a downstream face of the turret to transfer the filled body to another section of the machine which has a number of brush finishing stations arranged along a common conveyor.

In modern high performance toothbrush making machines operation of the filling tool is normally not stopped or even slowed down during indexing of the turret. The filling tool may operate at some 800 or even 1000 strokes per minute so that only approximately 50 ms are available to index the turret. Thus, when the last hole of a brush body has been filled, the turret indexes and places the first hole of a new brush body in front of the filling tool within the period of a single stroke of the filling member. It is thus clear that the turret should be as small and lightweight as possible to allow highspeed operation. Nevertheless, operating speed is mainly limited by the mass of the indexing turret, and also by the requirements of supplying new brush bodies to a moving turret, so that the supply unit must move with the turret, and of removing the filled brush bodies from a moving turret, requiring the gripper of the transfer unit to follow movements of the turret.

The present invention provides a new and improved method of producing brushes, in particular toothbrushes, wherein these limitations are avoided. In the method of the present invention as defined in claim 1, each carrier member supplied with new brush bodies to be filled is transferred from the conveyor to a position adjacent a preceding carrier member currently processed in the filling station. This transfer occurs during the time required for the filling tool to fill one or two brush bodies held on the carrier member in the filling station. After the brush body or brush bodies held on the carrier member have been filled with tufts of bristles, the carrier member is released from the drive of the filling station and transferred from the filling station to the conveyor during the time required for the filling tool to fill the brush body or brush bodies held on the following carrier member. The filling tool performs a continuous operation even during removal of each carrier member from the filling station and replacement by a following carrier member. Replacement of a carrier member in the filling station by the following carrier member can be done much faster than indexing of a turret. In addition, the carrier members with the brush bodies thereon can be moved much faster in the filling station to expose each hole to the filling member because the only mass to be moved is that of the carrier member and of the coupling means used to couple each carrier member to the drive of the filling station. During the filling of the brush body or brush bodies on the carrier member in the filling station, there is ample time to transfer a following carrier member from the conveyor to a position adjacent the carrier member currently coupled to the drive of the filling station, and ample time to remove the preceding carrier member with filled brush bodies thereon from the filling station to the conveyor. As a result, the overall operating speed of the machine can be increased beyond 1000 strokes per minute of the filling tool.

Another highly advantageous aspect of the invention is the fact that carrier members of similar uniform shape and size can be used for brush bodies of different types, shapes and/or size. In a conventional brush making machine with an indexing turret, when production is to be changed from one tooth brush model to another, the setup of the machine must be modified to adapt the clamping mechanism on the turret and possibly also the gripper for removing the brush bodies from the turret to the size and shape of the brush bodies to be processed. This setup is time-consuming and requires skilled personnel. In the method of the present invention, the carrier members are preferably provided as generally flat pallets of uniform rectangular shape. Only the clamping mechanism on each pallet must be specific to the brush body model to be processed. Thus, when production is to be changed from one model from another, only the pallets have to be changed.

The present invention allows the filling station to be located closely adjacent the conveyor so that the filling station is just one among several processing stations arranged along the conveyor. The conveyor can be a closed loop chain conveyor, a carrousel type conveyor or of any other appropriate type.

The brush bodies are preferably supplied to the conveyor in a predetermined orientation, for example in a direction perpendicular to the direction of movement of the conveyor. Thus, when the brush bodies arrive at the filling station, they will be in the same relative orientation. It may, however, be desirable to change the orientation of the brush bodies with respect to the plane in which the filling tool supplies the anchor members usually used for securing implanted tufts of bristles in the respective holes of the brush body. If this plane is parallel to the longitudinal direction of the brush body, all anchor members are aligned in parallel rows. Alignment of the anchor members in parallel rows may cause the head of the brush bodies to crack along these rows. To avoid this, a further embodiment of the present invention allows the orientation of the brush bodies to be modified with respect to the carrier members whereon they are clamped. After fresh brush bodies have been supplied to the carrier members, they are pivoted by e.g. 30 or 45° while being held on the carrier members and moved to the filling station while being in this relative orientation to the carrier members. Relative orientation of the brush bodies with respect to the plane in which anchor members are implanted by the filling member will be changed in like manner. After the carrier members have been removed from the filling station, the brush bodies are pivoted on their carrier members in a reverse direction to be restored to the orientation in which they had been originally supplied to the conveyor.

Further features and advantages of the invention will result from the following detailed description of preferred embodiments with reference to the drawings, wherein:
- Figure 1: is a schematic side view of a tooth brush making machine for performing the invention;
- Figure 2: is a schematic perspective view of the drive in a filling station of the machine shown in Figure 1;
- Figure 3a: shows a pallet type carrier member with a pair of brush bodies clamped thereon in a predetermined first orientation and a plan view of a brush body head showing the alignment of anchor members in parallel rows; and
- Figure 3b: a similar view showing the brush bodies in a second orientation pivoted from the first orientation by a predetermined angle α.

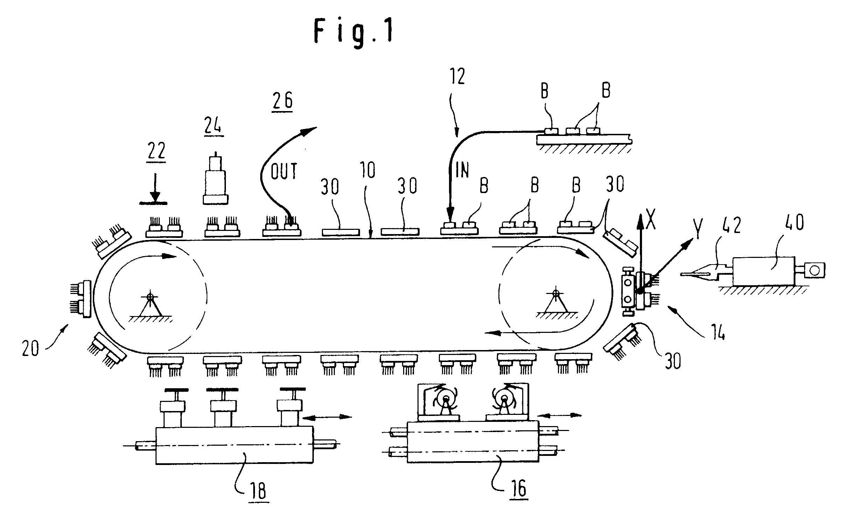

The brush making machine schematically shown in Figure 1 is a tooth brush machine with a chain-type conveyor 10 and a number of processing or handling stations located along the conveyor 10. More specifically, a brush body supply station 12 where fresh brush bodies B are supplied to the conveyor 10 is followed by a filling station 14 where the brush bodies B are filled with tufts of bristles. The filling station 14 is in turn followed by a number of finishing stations including a trimming station 16 where the ends of the bristles are cut to the desired length, a rounding station 18 where the free ends of the trimmed bristles are rounded, a cleaning station 20 where the nearly finished brushes are cleaned and a stamping station 22 where the brush bodies are provided with the desired stamp. The stamping station 22 can be followed by a quality inspection station 24. The last station is a removal station 26 where finished tooth brushes are removed from the conveyor 10.

The finishing stations 16 to 24 can be conventional and will therefore not be disclosed in further detail.

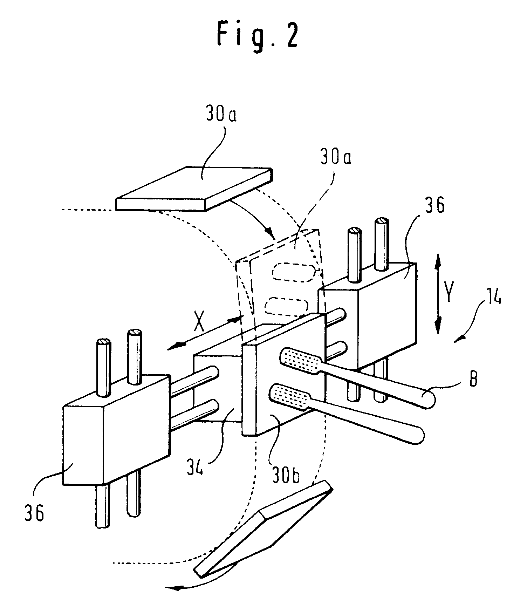

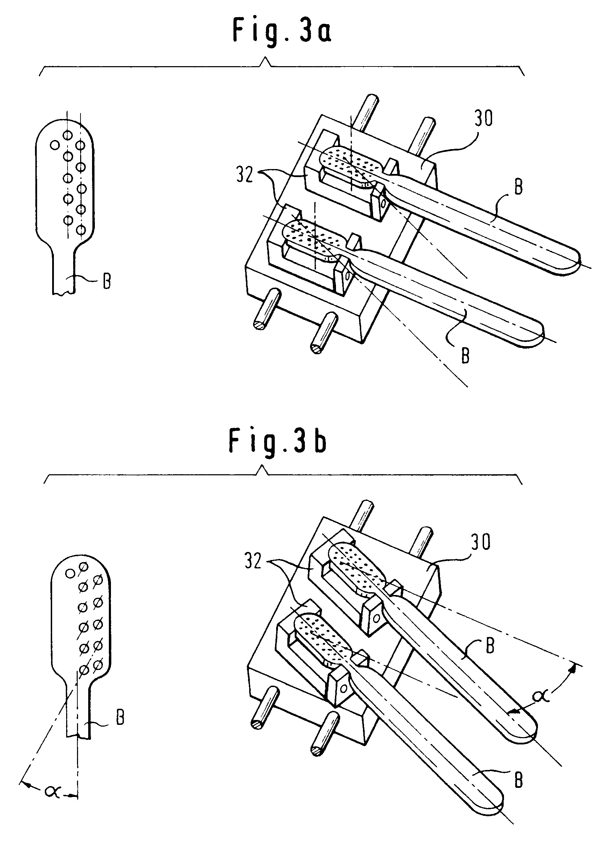

The conveyor 10 of the tooth brush machine is adapted to transport pairs of brush bodies B on generally flat pallets 30 of rectangular or square shape. Each pallet 30 is releasably linked to the conveyor 10 and has a pair of brush clamps 32 for holding a pair of brush bodies B in mutually parallel relationship, preferably perpendicular to the direction of movement of the conveyor 10, as shown in Figure 3a. After a pair of fresh brush bodies B have been received and are safely held on a pallet 30 by the brush clamps 32, the pallet 30 is moved by the conveyor 10 to the filling station 14. More particularly, each pallet 30 is transferred from the conveyor 10 to a position closely adjacent a preceding pallet which is currently received in the filling station 14. As shown in dashed lines in Figure 2, a following pallet 30a is transferred from the conveyor to a position closely adjacent a preceding pallet 30b currently received in the filling station 14. In the filling station 14, the pallet 30b with the brush bodies B clamped thereon is releasably coupled to an x-drive block which is part of a cross-slide including a pair of lateral y-drive blocks 36 to impart mutually perpendicular movements in the directions x and y to the pallet 30b. By these mutually perpendicular movements, the pallet 30b is moved in front of a filling tool 40 to expose each hole in the heads of the brush bodies B to a reciprocating filling member 42 of the filling tool 40. The filling tool 40 can be conventional and will not be disclosed in further detail. When a tuft of bristles has been implanted in each hole of the brush bodies B, the pallet 30b is released from the x-drive block 34 and removed from the filling station 14, and the following pallet 30a is moved to the filling station 14 and coupled to the x-drive block 34. Replacement of a pallet in the filling station 14 occurs during the time of a single stroke of the filling member 42 of the filling tool 40. In fact, operation of the filling tool is continuous and must not even be slowed down during the time required for replacement of a pallet in the filling station 14. After the last hole of a pair of brush bodies on a pallet 30 has been filled, the filling member 42 will retract in preparation of a new operating stroke, and when the filling member 42 is again extended to perform the next operating stroke, the first hole of a fresh brush body on the following pallet will have been placed in front of it.

During the time of filling a pair of brush bodies with tufts of bristles in the filling station 14, there is ample time to move a following pallet 30 to a position adjacent the pallet currently received in the filling station 14, and to transfer the preceding pallet 30 with filled brush bodies thereon to the conveyor 10 where the pallet is again linked to the conveyor chain.

Although all pallets 30 are of similar shape and dimension, the brush clamps 32 can be different as required by a particular tooth brush model. Depending on the particular tooth brush model, it may be required to move the pallets 30 in the filling station 14 along more than two axes. In these cases, other types of drives than those shown in Figure 2 may be more appropriate.

It is convenient to supply fresh brush bodies B in a direction perpendicular to the direction of movement of the conveyor 10 in the supply station 12. Thus, the brush bodies B will originally be received on the pallets 30 in the position shown in Figure 3a. If the orientation of the brush bodies B on the pallet 30 remains unchanged in the filling station 14, the flat metallic anchor members implanted by the filling member 42 in each hole in conventional manner will be aligned in parellel rows as also shown in Figure 3a. Alignment of the anchor members in parallel rows may cause the head portion of the brush body B to crack. To avoid this, the brush clamps 32 are preferably mounted on the pallets 30 to be pivotable so that the brush bodies B can be pivoted by an angle α with respect to their orientation in which they are originally received on the pallet 30. This is shown in Figure 3b. Figure 2 shows the brush bodies B on the pallet 30 with a similar orientation. As the filling tool 40 remains in the same position, the plane in which the flat anchor members are supplied by the filling member 42 will have been rotated by an angle α with respect to the longitudinal direction of the brush bodies B, as also shown in Figure 3b. Thus, the anchor members are no more aligned in parellel rows, and cracking of the head portions of the brush bodies B is avoided. After the pallets 30 leave the filling station 14, the brush bodies B can be restored to their orientation shown in Figure 3a to facilitate the finishing operations carried out in the finishing stations 16 to 24.

## Claims

1. A method of producing brushes, in particular toothbrushes, wherein brush bodies (B) having holes for receiving tufts of bristles are supplied to a filling station (14) where each brush body (B) is moved to expose each of its holes to a filling tool (40) which implants a tuft of bristles into each of said holes, whereafter the brush bodies are transferred to a conveyor (10) to be moved between a plurality of processing stations provided along the conveyor (10), a brush body supply station (12) being provided along said conveyor (10) upstream from said filling station (12) and said processing stations, said brush bodies (B) being transferred between said stations while being held on a carrier member (30), and each carrier member (30) being releasably coupled to a drive (34, 36) in said filling station (14) to move said carrier member (30) in a manner to successively expose each hole of the brush body (B) to said filling tool (40);
characterized in that
a) each of said carrier members (30) is transferred from said conveyor (10) to a position adjacent a preceding carrier member (30) in said filling station (14) during the time required for the filling tool (40) to fill at least one brush body (B) held on said preceding carrier member (30);
b) each of said carrier members (30) is transferred from said filling station (14) to said conveyor (10) during the time required for the filling tool (40) to fill at least one brush body (B) held by a following carrier member (30); and
c) each carrier member (30) is removed from said filling station (14) and replaced by a following carrier member (30) during continuous and at least substantially unretarded operation of said filling tool (40).

2. The method of claim 1, characterized in that said conveyor (10) conveys said carrier members (30) in a closed loop.

3. The method of claim 1 or 2, characterized in that carrier members (30) of similar uniform shape and size are used for brush bodies (B) which may be of different shape and/or size.

4. The method of any of claims 1 to 3, characterized in that at least two brush bodies (B) are held on each carrier member (30).

5. The method of any of claims 1 to 4, characterized in that each brush body (B) is held on each of said carrier members (30) by clamp means (32) allowing said brush body (B) to be pivoted relative to said carrier member (30).

6. The method of claim 5, characterized in that said brush bodies (B) are supplied to each carrier member (30) in a predetermined first position relative to said carrier member (30), pivoted to a predetermined second position relative to said carrier member (30) before or during transfer of said carrier member (30) from said supply station (12) to said filling station (14) and repositioned to said first position after removal from said filling station (14).

7. The method of any of claims 1 to 6, wherein said filling tool (40) has a reciprocating filling member (42) which performs one stroke for each tuft of bristles to be implanted in said brush body (B), characterized in that said filling tool (40) is operated at a speed in excess of 1000 strokes per minute.

8. The method of any of claims 1 to 7, characterized in that said carrier member is a generally flat pallet (30) of rectangular shape.

9. The method of any of claims 1 to 8, characterized in that the filling station (14) is located closely adjacent said conveyor (10).

## Patentansprüche

1. Verfahren zum Herstellen von Bürsten, insbesondere Zahnbürsten, bei dem Bürstenkörper (B) mit Löchern zur Aufnahme von Borsten einer Füllstation (14) zugeführt werden, bei der jeder Bürstenkörper (B) bewegt wird, um jedes seiner Löcher einem Füllwerkzeug (40) auszusetzen, welches ein Bündel aus Borsten in jedes der Löcher einbringt, woraufhin die Bürstenkörper zu einer Fördervorrichtung (10) überführt werden, um zwischen einer Mehrzahl von Verarbeitungsstationen bewegt zu werden, die entlang der Fördervorrichtung (10) vorgesehen sind, wobei entlang der Fördervorrichtung (10) vor der Füllstation (12) und den Verarbeitungsstationen eine Bürstenkörper-Zufuhrstation (12) vorgesehen ist, wobei die Bürstenkörper (B) zwischen den Stationen überführt werden, während sie auf einem Trägerteil (30) gehalten werden, und wobei jedes Trägerteil (30) lösbar mit einem Antrieb (34, 36) in der Füllstation (14) gekoppelt ist, um die Trägerteile (30) derart zu bewegen, daß nacheinander jedes Loch der Bürstenkörper (B) dem Füllwerkzeug (40) ausgesetzt wird;
dadurch gekennzeichnet, daß
a) jedes der Trägerteile (30) von der Fördervorrichtung (10) in eine zu einem vorhergehenden Trägerteil (30) in der Füllstation (14) benachbarte Stellung während der Zeit überführt wird, die das Füllwerkzeug (40) zum Füllen von wenigstens einem auf dem vorhergehenden Träger (30) gehaltenen Bürstenkörper (B) benötigt;
b) jedes der Trägerteile (30) von der Füllstation (14) zu der Fördervorrichtung (10) innerhalb der Zeit überführt wird, die von dem Füllwerkzeug (40) zum Füllen von wenigstens einem von einem nachfolgenden Trägerteil (30) gehaltenen Bürstenkörper (B) benötigt wird; und
c) jedes Trägerteil (30) während des kontinuierlichen und wenigstens im wesentlichen unverzögerten Betriebs des Füllwerkzeugs (40) von der Füllstation (14) entfernt und durch ein nachfolgendes Trägerteil (30) ersetzt wird.

2. Verfahren nach Anspruch 1, dadurch gekennzeichnet, daß die Fördervorrichtung (10) die Trägerteile (30) in einer geschlossenen Schleife befördert.

3. Verfahren nach Anspruch 1 oder 2, dadurch gekennzeichnet, daß Trägerteile (30) von gleicher einheitlicher Gestalt und Größe für Bürstenkörper (B) verwendet werden, welche verschiedene Gestalten und/oder Größen haben können.

4. Verfahren nach einem der Ansprüche 1 bis 3, dadurch gekennzeichnet, daß auf jedem Trägerteil (30) wenigstens zwei Bürstenkörper (B) gehalten werden.

5. Verfahren nach einem der Ansprüche 1 bis 4, dadurch gekennzeichnet, daß jeder Bürstenkörper (B) auf jedem Trägerteil (30) durch Klemmittel (32) gehalten ist, welche ermöglichen, den Bürstenkörper (B) relativ zu dem Trägerteil (30) zu verschwenken.

6. Verfahren nach Anspruch 5, dadurch gekennzeichnet, daß die Bürstenkörper (B) jedem Trägerteil (30) in einer vorbestimmten ersten Stellung relativ zu dem Trägerteil (30) zugeführt werden, sie vor oder während des Überführens des Trägerteils (30) von der Zufuhrstation (12) zu der Füllstation (14) in eine vorbestimmte zweite Stellung relativ zu dem Trägerteil (30) verschwenkt werden und sie nach dem Entfernen von der Füllstation (14) wieder in die erste Stellung zurückgestellt werden.

7. Verfahren nach einem der Ansprüche 1 bis 6, bei dem das Füllwerkzeug (40) ein hin- und hergehendes Füllteil (42) aufweist, welches für jedes in den Bürstenkörper (B) einzusetzende Bündel aus Borsten einen Hub ausführt, dadurch gekennzeichnet, daß das Füllwerkzeug (40) mit einer Geschwindigkeit von über 1000 Hüben je Minute betrieben wird.

8. Verfahren nach einem der Ansprüche 1 bis 7, dadurch gekennzeichnet, daß das Trägerteil eine allgemein flache Platte (30) von rechteckiger Gestalt ist.

9. Verfahren nach einem der Ansprüche 1 bis 8, dadurch gekennzeichnet, daß die Füllstation (14) eng benachbart zur Fördervorrichtung (10) angeordnet ist.

## Revendications

1. Procédé destiné à la production de brosses, en particulier des brosses à dents, dans lequel les corps de brosses (B) présentant des trous destinés à recevoir des touffes de poils sont approvisionnés à un poste de remplissage (14) où chaque corps de brosse (B) est déplacé afin d'exposer chacun de ses trous à un outil de remplissage (40) qui implante une touffe de poils dans chacun desdits trous, après quoi les corps de brosses sont transférés vers un convoyeur (10) afin d'être déplacés entre une pluralité de postes de traitement fournis le long du convoyeur (10), un poste d'approvisionnement de corps de brosses (12) étant fourni le long dudit convoyeur (10) en amont dudit poste de remplissage (12) et desdits postes de traitement, lesdits corps de brosses (B) étant transférés entre lesdits postes tout en étant maintenus sur un élément porteur (30), et chaque élément porteur (30) étant couplé de façon déverrouillable à un dispositif d'entraînement (34, 36) dans ledit poste de remplissage (14) afin de déplacer ledit élément porteur (30) de façon à exposer successivement chacun des trous du corps de brosse (B) audit outil de remplissage (40); caractérisé en ce que :
a) chacun desdits éléments porteurs (30) est transféré depuis ledit convoyeur (10) vers une position adjacente à un précédent élément porteur (30) dans ledit poste de remplissage (14) pendant le temps nécessaire à l'outil de remplissage (40) pour remplir au moins un corps de brosse (B) maintenu sur ledit élément porteur précédent (30) ;
b) chacun desdits éléments porteurs (30) est transféré depuis ledit poste de remplissage (14) vers ledit convoyeur (10) pendant le temps nécessaire à l'outil de remplissage (40) pour remplir au moins un corps de brosse (B) maintenu par un élément porteur suivant (30) ; et
c) chacun des éléments porteurs (30) est retiré dudit poste de remplissage (14) et remplacé par un élément porteur suivant (30) pendant le fonctionnement en continu et au moins sensiblement non retardé dudit outil de remplissage (40).

2. Procédé selon la revendication 1, caractérisé en ce que ledit convoyeur (10) convoie lesdits éléments porteurs (30) dans une boucle fermée.

3. Procédé selon les revendications 1 ou 2, caractérisé en ce que les éléments porteurs (30) de forme et de taille similaires et uniformes sont utilisés pour les corps de brosse (B) qui peuvent être de forme et/ou de taille différentes.

4. Procédé selon l'une quelconque des revendications 1 à 3, caractérisé en ce qu'au moins deux corps de brosses (B) sont maintenus sur chacun des éléments porteurs (30).

5. Procédé selon l'une quelconque des revendications 1 à 4, caractérisé en ce que chaque corps de brosse (B) est maintenu sur chacun desdits éléments porteurs (30) par des moyens formant bride de serrage (32) permettant audit corps de brosse (B) de tourner par rapport audit élément porteur (30).

6. Procédé selon la revendication 5, caractérisé en ce que lesdits corps de brosse (B) sont approvisionnés à chacun des éléments porteurs (30) dans une première position prédéterminée par rapport audit élément porteur (30), puis tournés vers une seconde position prédéterminée par rapport audit élément porteur (30) avant ou pendant le transfert dudit élément porteur (30) depuis ledit poste d'approvisionnement (12) vers ledit poste de remplissage (14) et repositionnés sur ladite première position après le retrait dudit poste de remplissage (14).

7. Procédé selon l'une quelconque des revendications 1 à 6, dans lequel ledit outil de remplissage (40) présente un élément de remplissage à mouvement alternatif (42), qui exécute une course pour chaque touffe de poils qui doit être implantée dans ledit corps de brosse (B), caractérisé en ce que ledit outil de remplissage (40) fonctionne à une vitesse dépassant 1000 courses par minute.

8. Procédé selon l'une quelconque des revendications 1 à 7, caractérisé en ce que ledit élément porteur est généralement une palette plate (30) de forme rectangulaire.

9. Procédé selon l'une quelconque des revendications 1 à 8, caractérisé en ce que le poste de remplissage (14) est situé de manière presque adjacente audit convoyeur (10).
